# EUROPÄISCHE PATENTSCHRIFT

(11) **EP 0 606 316 B1**
(45) Veröffentlichungstag und Bekanntmachung des Hinweises auf die Patenterteilung: **19.04.1995**
(21) Anmeldenummer: 92920504.5
(22) Anmeldetag: 29.09.1992
(51) Int. Cl.: B60L 11/02

(54) **ANTRIEBSANORDNUNG FÜR EIN KRAFTFAHRZEUG**
DRIVE ARRANGEMENT FOR A MOTOR VEHICLE
SYSTEME D'ENTRAINEMENT D'UN VEHICULE A MOTEUR

(30) Priorität: 04.10.1991 DE 4133059
(43) Veröffentlichungstag der Anmeldung: 20.07.1994
(73) Patentinhaber: MANNESMANN Aktiengesellschaft, 40027 Düsseldorf (DE)
(72) Erfinder: ADLER, Uwe, D-8720 Schweinfurt (DE); DREXL, Hans-Jürgen, D-8724 Schonungen (DE); LUTZ, Dieter, D-8720 Schweinfurt (DE); NAGLER, Franz, D-8729 Ottendorf (DE); OCHS, Martin, D-8720 Schweinfurt (DE); SCHIEBOLD, Stefan, D-8720 Schweinfurt (DE); SCHMIDT-BRÜCKEN, Hans-Joachim, D-8712 Geldersheim (DE); THIELER, Wolfgang, D-8728 Hassfurt (DE); WAGNER, Michael, D-8721 Niederwerrn (DE); WESTENDORF, Holger, D-8721 Hambach (DE); WYCHNANEK, Rainer, D-8721 Madenhausen (DE)
(74) Vertreter: Meissner, Peter E., Dipl.-Ing.
(86) Internationale Anmeldenummer: DE9200836
(87) Internationale Veröffentlichungsnummer: WO9307022

(56) Entgegenhaltungen:
- EP-A- 0 437 266
- DE-A- 3 243 515
- DE-A- 4 028 833
- PATENT ABSTRACTS OF JAPAN vol. 7, no. 163 (M-229)(1308) 16. Juli 1983 ; & JP-A-58 069 403

## Beschreibung

Die Erfindung betrifft eine Antriebsanordnung für ein Kraftfahrzeug und insbesondere eine Antriebsanordnung, bei welcher das Kraftfahrzeug von wenigstens einem Elektromotor angetrieben wird, der von einer ihrerseits von einer Brennkraftmaschine angetriebenen Generatoranordnung gespeist wird.

Herkömmliche Brennkraftmaschinen, wie sie üblicherweise in Kraftfahrzeugen eingesetzt werden, können eine gewünschte Ausgangsleistung bestimmter Größe bei unterschiedlicher Motordrehzahl erzeugen. In einem Drehmoment-Motordrehzahl-Kennlinienfeld folgen die Betriebspunkte gleicher Ausgangsleistung annähernd hyperbelförmigen Kennlinien entsprechend der Beziehung, daß die Ausgangsleistung im wesentlichen gleich dem Produkt aus Motordrehzahl und Drehmoment ist. Den Betriebspunkten konstanter Ausgangsleistung sind jedoch in dem Kennlinienfeld unterschiedliche Werte sonstiger Betriebsparameter, wie zum Beispiel des spezifischen Kraftstoffverbrauchs, der Schadstoffmenge und Schadstoffzusammensetzung der Abgase oder auch der Geräuschentwicklung der Brennkraftmaschine zugeordnet. Durch geeignete Auswahl der Betriebspunkte könnte für jede gewünschte Ausgangsleistung ein Optimum eines der Betriebsparameter, beispielsweise des spezifischen Kraftstoffverbrauchs, d.h. des auf die geleistete Arbeit bezogenen Kraftstoffverbrauchs, ermittelt werden.

Bei herkömmlichen, von einer Brennkraftmaschine über ein mechanisches Getriebe angetriebenen Kraftfahrzeugen können die Betriebspunkte für eine gewünschte Leistung nur sehr begrenzt dem Betriebsparameteroptimum angenähert werden, da die Motordrehzahl nur entsprechend der Getriebeabstufung wählbar verändert werden kann.

Aus "VDI-Berichte" Nr. 878, 1991, Seiten 611 bis 622 ist eine Antriebsanordnung für ein Kraftfahrzeug bekannt , dessen Räder von gesonderten Elektromotoren angetrieben werden. Den Strom der Elektromotore liefert ein von einer Brennkraftmaschine angetriebener Generator, wobei eine elektronische Steuerung den aus dem Generator den Elektromotoren zugeführten Strom abhängig von der an einem Fahrpedal vom Fahrer des Kraftfahrzeugs gewünschten Antriebsleistung steuert. Für derartige Antriebe geeignete Elektromotoren und Generatoren sind beispielsweise aus der europäischen Patentanmeldung 0 159 005 bekannt; eine geeignete Steuerung ist in der europäischen Patentanmeldung 0 340 686 beschrieben.

Die DE 32 43 515 A1 befaßt sich mit einer Strategie zur Einstellung von Leistung und Drehzahl des Verbrennungsmotors einer dieselelektrischen Lokomotive während des Anfahrvorgangs. Bei einer Lokomotive handelt es sich um ein spurgebundenes Fahrzeug bei dem im Unterschied zu Kraftfahrzeugen für den Straßenverkehr an sich üblicherweise in weiten Phasen des Fahrbetriebs relativ konstante Fahrbedingungen herrschen. Lediglich für die relativ kurze Phase des Anfahrvorgangs sollen gemäß diesem Stand der Technik unnötig hohe Verbrennungsmotordrehzahlen vermieden werden, die an sich zwangsläufige Folge des wegen der niedrigen Fahrzeuggeschwindigkeit ebenfalls niedrigen Antriebsleistung wären. Hierzu ist vorgesehen, unterhalb eines vorgegebenen Schwellenwertes der Fahrzeuggeschwindigkeit die Drehzahl des Verbrennungsmotors mit zunehmender Fahrzeuggeschwindigkeit und mit einer von der Führungsgröße (Soll-Leistung des Antriebs) abhängigen Steilheit ansteigen zu lassen, so daß die Drehzahl bei Erreichen des Schwellenwertes der Fahrzeuggeschwindigkeit den jeweiligen Drehzahlsollwert erreicht und bei höheren Geschwindigkeiten auf diesem Drehzahlsollwert gehalten wird. Die Drehzahlsollwerte sind im übrigen jeweils einem Soll-Leistungswert fest zugeordnet. Die Steuerung sorgt während des Anfahrvorgangs dafür, daß der Sollwert der elektrischen Leistung des Generators des Fahrzeugs entsprechend der Minderung der Verbrennungsmotor-Ist-Drehzahl verändert wird. Wie das Ausführungsbeispiel erkennen läßt, sind sowohl der Anstieg der Drehzahl im Übergangsbereich als auch die Zuordnung zwischen Führungsgröße und Drehzahl willkürlich als lineare Funktion vorgegeben. Die Möglichkeit, eine bestimmte Soll-Leistung des Verbrennungsmotors bei unterschiedlichen. Soll-Drehzahlen jeweils in Abhängigkeit von vorgegebenen Optimierungskriterien (z .B. Verbrauch, Geräuschemission, Schadstoffemission) anhand eines entsprechenden Kennlinienfeldes des Verbrennungsmotors festzulegen, wird nicht erwogen.

Schließlich offenbart die DE 40 28 833 A1 ein Steuersystem für ein Kraftfahrzeug mit Verbrennungsmotor und Automatik-Schaltgetriebe, wobei mittels eines Wählschalters auch eine Betriebsart "economy" auswählbar ist.Das Fahrzeug besitzt einen herkömmlichen mechanischen Antriebsstrang, so daß die Fahrzeuggeschwindigkeit bei stationärem Fahrbetrieb fest an die Drehzahl des Verbrennungsmotors gekoppelt ist. Abgesehen von der Auswahl der Getriebestufe bestehen keinerlei Möglichkeiten, die zur Erzielung einer gewünschten Fahrzeuggeschwindigkeit erforderliche Antriebsleistung in einem möglichst günstigen Punkt des Motorkennfeldes (Drehzahl/Drehmoment in Abhängigkeit von weiteren Betriebsparametern) vom Verbrennungsmotor erzeugen zu lassen. Eine Optimierung des Verbrennungsmotorbetriebs im Hinblick auf z.B. minimalen Verbrauch ist somit bei diesem bekannten Fahrzeug nicht möglich.

Aus der EP - A - 0437 266 ist eine Antriebsanordnung für ein Straßenfahrzeug mit Schwungradspeicher bekannt, und zwar im wesentlichen mit den Merkmalen im Oberbegriff des Patentanspruchs 1.
Hierbei werden Datenkombinationen für Betriebspunkte aus dem Motorkennlinienfeld der Brennkraftmaschine mit Optimumswerten bezüglich des minimalen Kraftstoffverbrauchs bzw. anderer Betriebsparameter in Abhängigkeit von Leistungs-Sollwerten gespeichert und es wird ein Motorstellglied entsprechend gesteuert.
Es ist die Aufgabe der Erfindung, eine Antriebsanordnung für ein Kraftfahrzeug zu schaffen, bei welcher der Betrieb der die Antriebsleistung erzeugenden Brennkraftmaschine besser als bisher optimiert werden kann.
Den Ausgangspunkt der Erfindung bildet eine Antriebsanordnung der vorstehend erläuterten Art, welche umfaßt:
eine Brennkraftmaschine mit wenigstens einem ihre Leistung und/oder ihr Drehmoment und/oder ihre Drehzahl beeinflussenden, von einem Stellantrieb steuerbaren Stellglied, eine mit der Abtriebswelle der Brennkraftmaschine drehfest verbundene elektrische Generatoranordnung, wenigstens einen aus der Generatoranordnung gespeisten, das Kraftfahrzeug antreibenden Elektromotor und eine elektronische Steuerung, die einerseits wenigstens den einen Stellantrieb und andererseits die von der Generatoranordnung erzeugte elektrische Leistung und/oder die von dem Elektromotor auf genommene elektrische Leistung abhängig von der Einstellung eines Fahrpedals steuert. Weiterhin sind Mittel zur Erfassung eines Istwerts der Drehzahl der Brennkraftmaschine oder der mit ihr gekuppelten Generatoranordnung sowie Mittel zur Erfassung eines Istwerts der von der Generatoranordnung erzeugten und/oder der von dem Elektromotor aufgenommenen elektrischen Leistung vorgesehen. Die Steuerung umfaßt hierbei Drehzahl-Regelmittel , die die Ist-Drehzahl auf einem vorgegebenen Drehzahl-Sollwert halten, und Leistungs-Regelmittel, die die elektrische Ist-Leistung auf einem vorgegebenen Leistungs-Sollwert halten. Der Steuerung ist ein Datenspeicher mit Kennfelddaten für Kombinationen von Daten für den Leistungs-Sollwert mit Daten für den Drehzahl-Sollwert und/oder Daten für die Einstellung wenigstens des einen Stellantriebs zugeordnet, und die Steuerung wählt die Datenkombinationen abhängig von der Einstellung des Fahrpedals aus.

Erfindungsgemäß repräsentieren bei einer solchen Antriebsanordnung die für die Einstellung der Brennkraftmaschine und der Generatoranordnung aus dem Datenspeicher auszuwählenden Datenkombinationen Betriebspunkte aus dem Motorkennlinienfeld der Brennkraftmaschine mit Optimumswerten bezüglich wenigstens eines Betriebsparameters, insbesondere Betriebspunkte mit minimalem spezifischem Kraftstoffverbrauch und/oder minimaler Schadstoffemission und/oder minimaler Geräuschentwicklung und/oder maximaler Schonung der Brennkraftmaschine. Die Betriebspunkte werden in Abhängigkeit von Leistungs-Sollwerten festgelegt, wobei der Steuerung ein Sensor zum Erfassen eines Istwertes des die Datenkombination bestimmenden Betriebsparameters zugeordnet ist und die Steuerung abhängig von dem vorgegebenen Leistungs-Sollwert eine Datenkombination mit Daten für die Einstellung wenigstens des einen Stellglieds der Brennkraftmaschine und/oder Daten für den Drehzahl-Sollwert aus dem Datenspeicher auswählt. Die Steuerung erfaßt nach Einstellen des Betriebspunktes an der Brennkraftmaschine eine Abweichung des Istwertes von dem durch die Datenkombination des Betriebspunktes vorgegebenen gespeicherten Wert des Betriebsparameters und korrigiert den gespeicherten Wert abhängig von der Abweichung, insbesondere in Inkrementen. Die durch die Datenkombination vorgegebenen Betriebspunkte lassen sich als Basisregelgrößen bei der Steuerung des Betriebs der Brennkraftmaschine einsetzen, um so die jeweils über das Fahrpedal angeforderte Leistung verbrauchsgünstig, umweltschonend und motorschonend einstellen zu können.

Der Erfindung liegt die Überlegung zugrunde, daß die von der Generatoranordnung erzeugte oder die von dem Elektromotor aufgenommene elektrische Leistung ein mit verhältnismäßig einfachen Mitteln und sehr exakt bestimmbares Maß für die von der Brennkraftmaschine erzeugte Antriebsleistung ist. Auch lassen sich der elektrische Wirkungsgrad der Generatoranordnung und die elektrischen Verluste der Steuerung verhältnismäßig leicht bestimmen und auf die Antriebsleistung der Brennkraftmaschine zurückrechnen. Da sowohl die Leistung als auch die Drehzahl auf vorgegebene Werte eingestellt werden, läßt sich der Betriebspunkt, in welchem die Brennkraftmaschine in ihrem Motorkennfeld betrieben wird, exakt einstellen. Die in dem Datenspeicher gespeicherten Datenkombinationen legen den Betriebspunkt fest. Die Steuerung hat damit die Möglichkeit, zusätzliche Betriebsparameter mit zu berücksichtigen, deren Daten jeweils mit ein Bestandteil der Datenkombination sein können. Die Datenkombinationen können auf diese Weise ein gewünschtes Optimierungsziel repräsentieren, beispielsweise indem den einzelnen Leistungs-Sollwerten diejenigen Daten für die Einstellung des Stellantriebs und für den Drehzahl-Sollwert zugeordnet werden, für die sich der minimale spezifische Kraftstoffverbrauch ergibt. In gleicher Weise läßt sich das Abgasverhalten optimieren oder die Geräuschemission der Brennkraftmaschine.

Das Konzept der Einregelung der Leistung der Brennkraftmaschine auf einen vorbestimmten Leistungswert kann auf unterschiedliche Weise realisiert werden. In einer ersten Variante ist vorgesehen, daß die Drehzahl-Regelmittel die elektrische Leistung der Generatoranordnung und/oder des Elektromotors beeinflussen und daß die Steuerung den Stellantrieb eines Leistungs-Einstellglieds der Brennkraftmaschine, insbesondere einer Drosselklappen- oder Einspritzpumpenanordnung, zunächst entsprechend den aus dem Datenspeicher ausgewählten Einstelldaten einstellt, und daß nach Einregelung des Drehzahl-Sollwerts die Leistungs-Regelmittel den Stellantrieb des Leistungs-Stellglieds beeinflussen. Bei diesem Konzept wird zunächst die Brennkraftmaschine auf die Drehzahl der im Datenspeicher gespeicherten Datenkombination eingestellt, und erst dann wird die Leistung der Brennkraftmaschine auf den gewünschten Leistungswert eingeregelt. Auf diese Weise lassen sich Abweichungen im tatsächlichen Betrieb der Brennkraftmaschine von den Daten des Kennfelds erkennen und ausgleichen.

Während bei dem vorstehenden Konzept die Drehzahl der Brennkraftmaschine-Generator-Einheit durch Regeln der elektrischen Leistung und damit des Drehmoments der Generatoranordnung geregelt wird, ist bei einer Variante vorgesehen, daß die Drehzahl-Regelmittel den Stellantrieb eines Leistungs-Stellglieds der Brennkraftmaschine, insbesondere der Drosselklappen- oder Einspritzpumpenanordnung beeinflussen, während die Leistungs-Regelmittel die elektrische Leistung der Generatoranordnung und/oder des Elektromotors beeinflussen.

Der Leistungs-Sollwert wird beispielsweise abhängig von der Einstellung eines Fahrpedals des Kraftfahrzeugs vorgegeben. Bei einer Änderung der Einstellung des Fahrpedals läßt sich der Betriebspunkt nach unterschiedlichen Strategien dem geänderten vorgegebenen Leistungs-Sollwert nachführen. Das Nachführen kann beispielsweise dadurch erfolgen, daß die Steuerung bei der Änderung des vorgegebenen Leistungs-Sollwerts das Leistungsstellglied der Brennkraftmaschine auf die durch die Datenkombination des geänderten Leistungs-Sollwerts bestimmte Einstellung einstellt und dadurch eine Drehmomentänderung der Brennkraftmaschine festlegt, die es der Brennkraftmaschine ermöglicht, auf den geänderten Betriebspunkt zu beschleunigen oder abzubremsen. Die Drehzahlregelmittel und Leistungsregelmittel sorgen dann dafür, daß sich am neuen Betriebspunkt die Verhältnisse entsprechend der Datenkombination des geänderten Leistungs-Sollwerts einstellen.

Eine Variante, die es insbesondere auch erlaubt, die Leistungsänderung im Optimum eines Betriebsparameters der Brennkraftmaschine, beispielsweise bei minimalem spezifischem Kraftstoffverbrauch, durchzuführen, sieht vor, daß die Steuerung bei einer Änderung des vorgegebenen Leistungs-Sollwerts zunächst die elektrische Leistung konstant hält, während die Drehzahl-Regelmittel die Drehzahl an den durch die Datenkombination des geänderten Leistungs-Sollwerts bestimmten Drehzahl-Sollwert annähern. Insbesondere kann bei dieser Variante das für eine Erhöhung des Leistungs-Sollwerts für die Beschleunigung der Brennkraftmaschine benötigte Differenz-Drehmoment durch eine Erniedrigung des Drehmoments der Generatoranordnung bereitgestellt werden. Die Steuerung sorgt in dieser Variante dafür, daß bei einer Erhöhung des Leistungs-Sollwerts zunächst die Brennkraftmaschine so weit beschleunigt wird, daß die im neuen Betriebspunkt gewünschte Leistung erzeugt werden kann, bevor die elektrische Leistung für die Beschleunigung des Fahrzeugs an den Elektromotor weitergeleitet wird.

Die Steuerung der Brennkraftmaschine auf der Basis der dem Optimum zumindest eines Betriebsparameters folgenden Datenkombinationen erlaubt die adaptive Korrektur der Werte des Betriebsparameter-Optimums und damit eine selbsttätige Optimierung der Betriebspunkte in bezug auf den Betriebsparameter. Es versteht sich, daß die Korrektur des Betriebsparameters in einem gesonderten Kennfeld dieses Betriebsparameters durchgeführt werden kann, so daß die Steuerung nach einer Korrektur des gespeicherten Werts des Betriebsparameters den Betriebspunkt, welcher dem Optimum des Betriebsparameters zugeordnet ist, abhängig von dem korrigierten Wert des Betriebsparameters für die Datenkombination neu festlegt. Insbesondere in Varianten, bei welchen dem Betriebsparameter gesonderte Kennfelder zugeordnet sind, kann vorgesehen sein, daß der Steuerung ein die Temperatur der Brennkraftmaschine erfassender Sensor zugeordnet ist und daß die Steuerung den gespeicherten Wert des Betriebsparameters abhängig von der erfaßten Temperatur korrigiert. Auf diese Weise läßt sich auch das Optimum des Betriebsparameters, beispielsweise des spezifischen Kraftstoffverbrauchs beispielsweise abhängig von der Öltemperatur oder der Kühlwassertemperatur der Brennkraftmaschine auf ein Minimum bringen. In gleicher Weise können auch Datenkombinationen für mehrere sich gegebenenfalls gegenseitig beeinflussende Betriebsparameterkombinationen vorgegeben werden, wie zum Beispiel minimaler spezifischer Kraftstoffverbrauch bei möglichst geringer Schadstoffemission. Der Steuerung werden in einem solchen Fall Daten über den tatsächlichen Kraftstoffverbrauch, die beispielsweise durch einen Kraftstoff-Durchflußsensor gemessen oder aus Kraftstoff-Einspritzdaten ermittelt werden, und Daten eines Abgassensors, beispielsweise einer Lambda-Sonde zugeführt. Auch bei dieser Variante kann die Temperaturabhängigkeit dieser Betriebsparameter berücksichtigt sein. Speziell bei der Berücksichtigung mehrerer Betriebsparameter kann es zur Vereinfachung der Betriebspunkteinstellung der Brennkraftmaschine günstig sein, wenn der Betriebspunkt der Brennkraftmaschine über mehrere unterschiedliche Stellmittel beeinflußt wird. Beispielsweise kann zusätzlich zur Leistungseinstellung der Brennkraftmaschine der Zündzeitpunkt oder der Kraftstoff-Einspritzzeitpunkt beeinflußt werden.

Bei den vorstehend erläuterten Ausgestaltungen der Erfindung erfolgt die betriebsparameteroptimierte Steuerung der Brennkraftmaschine auf der Basis gespeicherter Datenkombinationen. Das der Erfindung zugrunde liegende Konzept erlaubt auch eine "On-line"-Optimierung des Betriebspunkts der Brennkraftmaschine. Unter einem zweiten Aspekt der Erfindung ist es Ziel, den Betrieb der Brennkraftmaschine so zu steuern, daß mehrere Betriebsparameter zugleich optimiert werden können.

Ausgehend von der eingangs erläuterten Antriebsanordnung für Kraftfahrzeuge mit elektromotorischem Antrieb wird dieses Ziel dadurch erreicht, daß der Steuerung Sensoren zur Erfassung von Istwerten mehrerer der Betriebsparameter der Brennkraftmaschine zugeordnet sind, insbesondere zur Erfassung des spezifischen Kraftstoffverbrauchs und/oder der Schadstoffemission und/oder der Schadstoffzusammensetzung und/oder der Geräuschentwicklung, daß der der Steuerung zugeordnete Datenspeicher Kombinationsalgorithmen für vorbestimmte, gleichzeitig zu erreichende Optima mehrerer der Betriebsparameter speichert und daß die Steuerung bei auf dem vorgegebenen Leistungs-Sollwert gehaltener Leistung der Brennkraftmaschine oder der Generatoranordnung oder des Elektromotors den Drehzahl-Sollwert und/oder die Einstellung wenigstens des einen Stellantriebs abhängig von den erfaßten Istwerten der Betriebsparameter und dem im Datenspeicher gespeicherten Kombinationsalgorithmen so variiert, daß die Brennkraftmaschine bei dem Optimum der Betriebsparameter betrieben wird. Unter diesem Aspekt sucht die Steuerung selbsttätig nach dem Optimum des Betriebsparameters für den vorgegebenen Leistungs-Sollwert, wobei durch die Algorithmen der Zusammenhang zwischen den Betriebsparametern in gewünschter Weise vorgegeben wird. Beispielsweise kann der Zündwinkel und die Drosselklappenstellung gemeinsam derart variiert werden, daß bei konstant bleibender Leistung der spezifische Verbrauch abnimmt, ohne daß jedoch zulässige Höchstgrenzen der Schadstoffemission überschritten werden. Zusätzlich oder alternativ kann der Kraftstoffverbrauch mit Forderungen nach geringer Geräuschentwicklung bei angenehmem Klangbild und/oder hohem Beschleunigungsvermögen bei weitgehender Motorschonung optimiert werden. Soweit für dieses Ziel zur Ermittlung der Istwerte Sensoren erforderlich sind, sollen hierunter nicht nur Sensoren verstanden werden, die den Betriebsparameter direkt messen, sondern auch Mittel, die den Istwert indirekt aus anderen Informationen ermitteln, wie zum Beispiel Mittel, die den spezifischen Kraftstoffverbrauch aus der Einspritzdauer ermitteln. Die Variation des Drehzahl-Sollwerts und/oder die Einstellung wenigstens des einen Stellantriebs durch die Steuerung erfolgt zweckmäßigerweise so, daß zusätzlich zur Leistung zumindest einer der Betriebsparameter auf einem konstanten Wert gehalten wird, während der Wert eines weiteren Betriebsparameters dem Optimum angenähert wird.

Um die Optimierung der Betriebsparameter zu beschleunigen, speichert der Datenspeicher ferner Kennfelddaten für Kombinationen von Daten für den Leistungs-Sollwert und/oder Daten für den Drehzahl-Sollwert und/oder Daten für die Einstellung wenigstens des einen Stellantriebs mit Daten für den Wert zumindest eines der Betriebsparameter. Die Steuerung erfaßt Abweichungen des von dem Sensor erfaßten Istwerts des Betriebsparameters von dem gespeicherten Wert und korrigiert den gespeicherten Wert abhängig von der Abweichung insbesondere in Inkrementen. Auf diese Weise stehen in dem Datenspeicher Basisregelgrößen zur Verfügung, von denen ausgehend die Steuerung den optimalen Betriebspunkt einstellt. Das letztgenannte Konzept läßt sich auch zur Aktualisierung der unter dem ersten Aspekt der Erfindung erläuterten Datenkombinationen ausnutzen.

Von besonderer Bedeutung ist eine Ausgestaltung, bei der der Datenspeicher nicht nur die vorstehend erläuterten korrigierten Betriebsparameterdaten speichert, sondern auch Kombinationen von Anfangsdaten, die die Kennfelddaten im Neuzustand der Brennkraftmaschine repräsentieren. Die Steuerung vergleicht die in vorstehender Weise korrigierten Daten wenigstens eines Betriebsparameters, insbesondere des spezifischen Kraftstoffverbrauchs mit den Anfangsdaten und erzeugt bei Überschreitung eines vorbestimmten Werts oder eines vorbestimmten Kennfeldverlaufs der Abweichung ein eine Betriebsstörung repräsentierendes Steuersignal. Der Vergleich der aktuellen Betriebsparameterdaten mit den Anfangsdaten eröffnet Motordiagnosemöglichkeiten. Ändert sich beispielsweise der Kraftstoffverbrauch abrupt unter Abfall des Drehmoments oder der Leistung der Brennkraftmaschine, so kann hieraus auf den Ausfall eines oder mehrerer Zylinder der Brennkraftmaschine geschlossen werden. Übermäßige Änderungen der Schadstoffemission lassen sich als Defekt von Komponenten der Steuerung eines Dreiwegekatalysators interpretieren.

Das die Betriebsstörung repräsentierende Steuersignal läßt sich zur Information des Fahrers beispielsweise durch Aktivierung einer Warneinrichtung ausnutzen. Ebenso kann ein Fehlerspeicher eines Diagnosesystems gesetzt werden, der Daten für eine spätere Reparatur speichert. Abhängig von der Art des diagnostizierten Fehlers kann aber auch unmittelbar in den Betrieb der Brennkraftmaschine eingegriffen werden, um weitergehende Schäden zu vermeiden. Beispielsweise kann die maximale Leistung und/oder die maximale Drehzahl der Brennkraftmaschine auf tolerierbare Werte begrenzt werden, oder aber es wird ein die Kraftstoffeinspritzmenge eines defekten Zylinders reduzierendes Notfahrprogramm aktiviert.

Im folgenden soll die Erfindung anhand einer Zeichnung näher erläutert werden. Hierbei zeigt:
- Fig. 1: eine schematische Darstellung einer erfindungsgemäßen Antriebsanordnung für ein Kraftfahrzeug;
- Fig. 2: ein Motorkennlinienfeld einer Brennkraftmaschine der Anordnung nach Fig. 1 zur Erläuterung der Betriebsweise der Anordnung;
- Fig. 3: eine Variante der Antriebsanordnung aus Fig. 1;
- Fig. 4: ein Motorkennlinienfeld zur Erläuterung der Betriebsweise der Antriebsanordnung nach Fig. 3.

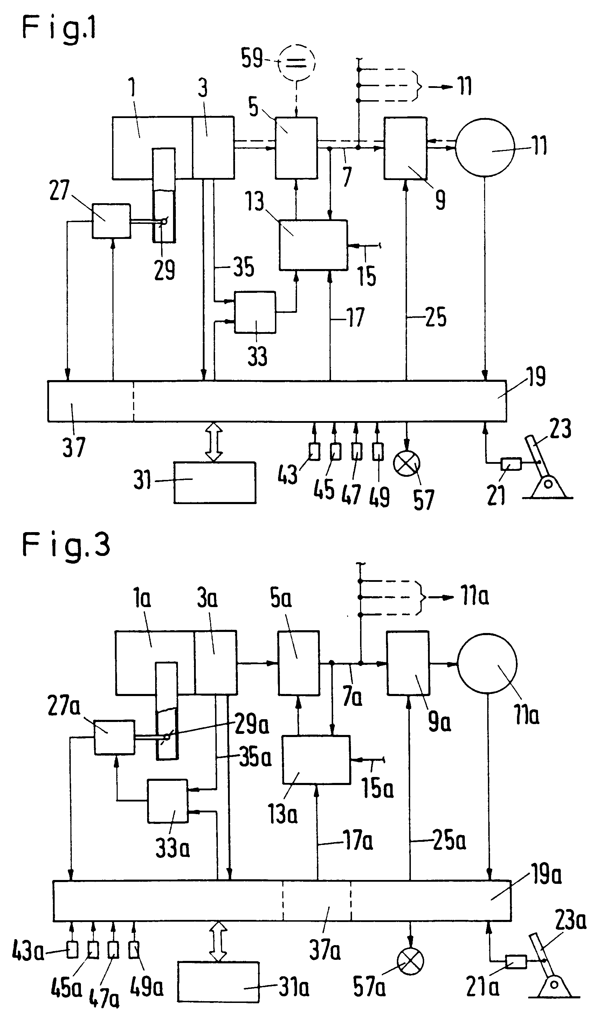

Die in Fig. 1 dargestellte Antriebsanordnung umfaßt eine von einer Brennkraftmaschine 1 angetriebene Generatoranordnung 3 eines Typs mit einer Vielzahl statorseitiger Strangwicklungen und rotorseitiger Permanentmagnete. An die nicht näher dargestellten Strangwicklungen ist eine elektronische Kommutierungs- und Stromsteuerschaltung 5 angeschlossen, die den von der Generatoranordnung 3 bei Antrieb durch die Brennkraftmaschine 1 gelieferten Wechselstrom durch elektronische Kommutierung in einen Gleichstrom steuerbarer Größe wandelt. Die Stromsteuerschaltung 5 speist über einen Gleichspannungszwischenkreis 7 mehrere elektronische Kommutierungs- und Stromsteuerschaltungen 9 von Elektromotoren 11, von denen jeder gesondert je eines der Räder des Kraftfahrzeugs antreibt. Fig. 1 zeigt lediglich einen der Elektromotore 11 mit zugehöriger Kommutierungs- und Stromsteuerschaltung. Auch bei den Elektromotoren 11 handelt es sich bevorzugt um Motore mit einer mehrsträngigen Statorwicklung und einem Permanentmagnetrotor. An die Kommutierungs- und Stromsteuerschaltung 5 ist eine Spannungsregelschaltung 13 angeschlossen, die die Ist-Spannung des Gleichstromzwischenkreises 7 erfaßt und über die Stromsteuerschaltung 5 auf einem bei 15 vorgebbaren Sollwert hält.

Über einen Signalweg 17 kann der von der Stromsteuer-Schaltung 5 an den Gleichspannungszwischenkreis 7 abgegebene Gleichstrom von einer Steuerung 19 gesteuert werden.

Die Steuerung 19 spricht auf die mittels eines Sensors 21 erfaßte Stellung eines Fahrpedals 23 an und steuert die dem Produkt aus Strom mal Spannung des Gleichspannungszwischenkreises entsprechende, für den Antrieb zur Verfügung stehende elektrische Leistung abhängig von der Fahrpedalstellung. Die Steuerung 19 steuert über einen Signalweg 25 darüber hinaus den Strom der Elektromotore 11 und damit deren Antriebsdrehmoment.

Die an den Gleichstromzwischenkreis 7 gelieferte elektrische Leistung muß unter Berücksichtigung der Verluste der Generatoranordnung 3 und der Stromsteuerschaltung 5, d.h. unter Berücksichtigung der elektrischen Wirkungsgrade dieser Komponenten, von der Brennkraftmaschine 1 aufgebracht werden. Die Steuerung 19 steuert dementsprechend über einen Stellantrieb 27 ein Leistungsstellglied 29 der Brennkraftmaschine, beispielsweise eine Drosselklappe oder eine Einspritzpumpe, ebenfalls abhängig von der Fahrpedalstellung.

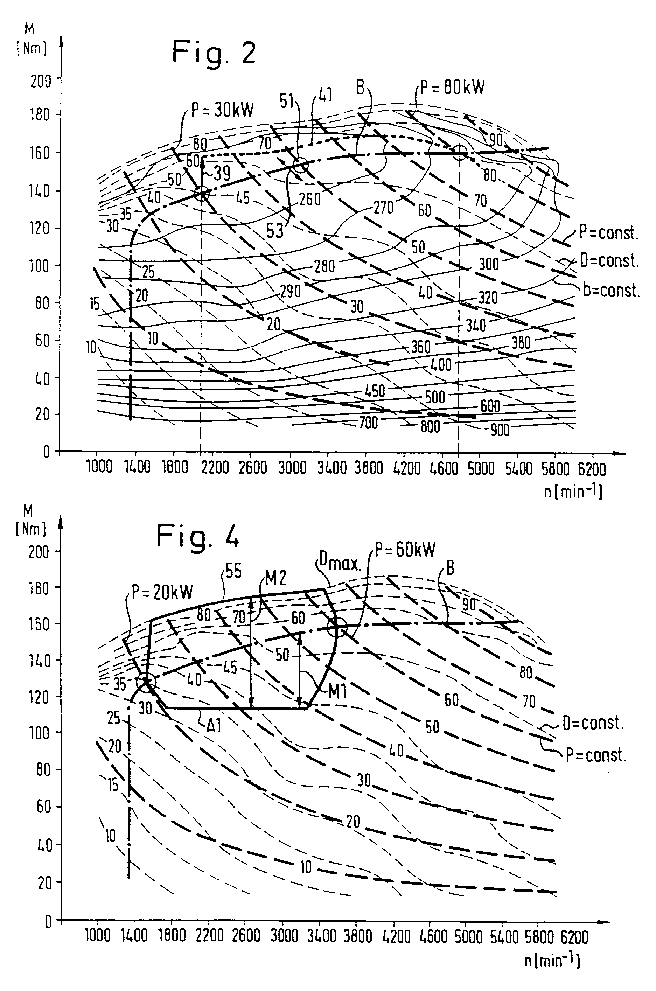

Aufgrund der mechanischen Antriebsverbindung arbeiten die Brennkraftmaschine 1 und die Generatoranordnung 3 mit gleicher Drehzahl, wobei im stationären Betrieb das von der Brennkraftmaschine 1 abgegebene Drehmoment gleich dem von der Generatoranordnung 3 aufgenommenen Drehmoment ist. Die von der Brennkraftmaschine erzeugte Leistung ist näherungsweise proportional dem Produkt aus Drehmoment und Drehzahl. Entsprechendes gilt für die von der Generatoranordnung 3 erzeugte elektrische Leistung, die gleich der Leistung der Brennkraftmaschine 1 vermindert um die Wirkungsgradverluste der Generatoranordnung ist. Die Einstellung des Leistungsglieds 29 der Brennkraftmaschine 1 einerseits und der an der Stromsteuerschaltung 5 eingestellte Generatorstrom andererseits bilden zwei Einflußgrößen, die es erlauben, den Betriebspunkt der Brennkraftmaschine 1 in deren Kennfeld längs einer Kennlinie konstanter Leistung im wesentlichen beliebig zu variieren. Fig. 2 zeigt das Kennfeld einer Brennkraftmaschine mit 100 kW Leistung. Das Kennlinienfeld zeigt das von der Brennkraftmaschine abgegebene, von der Generatoranordnung aufgenommene Drehmoment M in Abhängigkeit von der Drehzahl n. Mit dick gestrichelten Linien sind in dem Kennlinienfeld Kurven P konstanter Leistung der Brennkraftmaschine dargestellt. Dünn gestrichelte Linien D bezeichnen unter Angabe des Drosselklappenwinkels die Einstellung des Leistungsstellglieds der Brennkraftmaschine. Mit ausgezogenen dünnen Linien sind in dem Kennfeld der Fig. 2 Kurven b mit konstantem spezifischem Kraftstoffverbrauch in Gramm pro Kilowattstunde eingezeichnet. Das Kennfeld zeigt, daß Betriebspunkte gleicher Leistung bei unterschiedlichen Drehzahlen durch geeignete Einstellung des Drosselklappenwinkels erreicht werden können, daß aber jedem Leistungswert nur ein Betriebspunkt mit minimalem spezifischem Kraftstoffverbrauch zugeordnet ist. Die Betriebspunkte mit minimalem spezifischem Kraftstoffverbrauch liegen in dem Kennfeld auf einer dick strichpunktiert eingezeichneten Linie B. Beispielsweise ist der spezifische Kraftstoffverbrauch für eine Leistung von 30 kW minimal, wenn der Drosselklappenwinkel 45° und die Drehzahl etwa 2100 Umdrehungen pro Minute beträgt.

Die Antriebsanordnung nach Fig. 1 erlaubt es, die Brennkraftmaschine 1 zumindest im stationären Betrieb stets in einem Betriebspunkt mit minimalem Kraftstoffverbrauch zu betreiben. Hierzu sind in einem Datenspeicher 31 der Steuerung 19 Datenkombinationen des Kennfelds gespeichert, die die Betriebspunkte der Kennlinie B, für die sich minimaler spezifischer Kraftstoffverbrauch ergibt, speichert. Die gespeicherten Datenkombinationen umfassen für die den einzelnen Leistungswerten zugeordneten Betriebspunkte jeweils Daten für einen Drehzahl-Sollwert sowie Daten für die Einstellung des Leistungsstellglieds der Brennkraftmaschine 1. Die Steuerung 19 liest abhängig von dem über das Fahrpedal 23 angeforderten Leistungs-Sollwert den Drehzahl-Sollwert sowie den Einstellwert des Stellglieds 29 aus dem Datenspeicher 31 aus. Ein Drehzahlregelkreis 33, der Bestandteil der Steuerung 19 sein kann, regelt über die Stromsteuerschaltung 5 die elektrische Leistung der Generatoranordnung 33 auf einen Wert ein, bei dem die Drehzahl gleich dem Drehzahl-Sollwert des gewünschten Betriebspunkts ist. Die bei 35 dem Drehzahlregler 33 zugeführte Ist-Drehzahlinformation wird beispielsweise mittels eines Sensors oder dergleichen erfaßt. Zugleich mit der Einstellung der Drehzahl stellt die Steuerung 19 den Stellantrieb 27 des Leistungsstellglieds 29 auf den durch die Datenkombination festgelegten Drosselklappenwinkel.

Aufgrund von Temperatureinflüssen oder sonstiger Betriebsparameter der Brennkraftmaschine 1 kann die von der Brennkraftmaschine 1 tatsächlich erzeugte Leistung von dem der Datenkombination des Betriebspunkts zugrunde liegenden Leistungssollwert abweichen. Die Steuerung 19 umfaßt deshalb einen bei 37 angedeuteten Leistungsregler, der abhängig von der durch Strom und Spannung der Generatoranordnung 3 bestimmten elektrischen Leistung einen Leistungs-Istwert ermittelt und mit dem entsprechend der Fahrpedalstellung vorgegebenen Leistungs-Sollwert vergleicht. Zur Leistungsregelung überwacht die Steuerung 19, ob die Drehzahl den Drehzahl-Istwert erreicht hat und gibt danach den auf den Stellantrieb 27 wirkenden Leistungsregler 37 zum Einregeln der Leistung auf den Leistungs-Sollwert frei.

Bei einer Änderung der Fahrpedalstellung, beispielsweise für eine Erhöhung der Leistung von P = 30 kW auf P = 80 kW, ändert die Steuerung 19 die Drosselklappenstellung D von 45° auf den der Datenkombination des neuen Betriebspunkts bei P = 80 kW entsprechenden Winkel von 60°. Die Drosselklappenstellungsänderung bewirkt eine in Fig. 2 durch einen Pfeil 39 dargestellte Erhöhung des Drehmoments, durch die die Brennkraftmaschine 1 auf die dem neuen Betriebspunkt zugeordnete Drehzahl von etwa 4750 Umdrehungen pro Minute beschleunigt wird. Nachdem der Drehzahlregler 33 die Drehzahl auf diesen durch die Datenkombination des neuen Betriebspunkts festgelegten Drehzahlsollwert eingeregelt hat, regelt auch der Leistungsregler 37 die Leistung der Brennkraftmaschine 1 auf den die Datenkombination des neuen Betriebspunkts bestimmenden Leistungs-Sollwert von 80 kW ein. Mit einer punktierten Linie 41 ist in Fig. 2 der drehzahlabhängige Verlauf des Motormoments während der Leistungsänderung dargestellt.

Das Kennfeld der Fig. 2 zeigt die Abhängigkeit des Drehmoments M der Brennkraftmaschine von der Drehzahl der Einheit aus Brennkraftmaschine und Generatoranordnung. Die Steuerung der Antriebsanordnung kann jedoch auch auf der Grundlage eines Kennfelds erfolgen, welches als Parameter die elektrische Ausgangsleistung der Generatoranordnung 3 oder der Stromsteuerung 5 enthält, also den Wirkungsgrad dieser Komponenten mit berücksichtigt. Das Kennlinienfeld des spezifischen Kraftstoffverbrauchs ist in Fig. 2 dem Drehmomentkennfeld der Brennkraftmaschine überlagert, wobei die Datenkombinationen bereits die Betriebspunkte mit minimalem spezifischem Kraftstoffverbrauch repräsentieren. Das Kennfeld des spezifischen Kraftstoffverbrauchs b kann jedoch auch gesondert gespeichert sein, und die Steuerung 19 kann die Datenkombinationen der Betriebspunkte im Einzelfall jeweils aus mehreren Kennfeldern errechnen.

Der Steuerung 19 sind bei 43 angedeutete Kraftstoffmeßeinrichtungen zugeordnet, die den tatsächlichen Kraftstoffverbrauch ermitteln. Bei den Kraftstoffmeßeinrichtungen kann es sich um Durchflußmesser oder dergleichen handeln oder aber um Mittel, die eine Information über die zugeführte oder eingespritzte Kraftstoffmenge einem elektronischen Motorsteuerungssystem entnehmen oder aus Öffnungszeiten von Einspritzventilen ermitteln. Die Steuerung 19 ermittelt den spezifischen Kraftstoff-Istverbrauch aus der aktuell zugeführten Kraftstoffmenge bezogen auf die im aktuellen Betriebspunkt eingestellte Leistung. Die in dem Datenspeicher 31 gespeicherten Daten über den spezifischen Kraftstoffverbrauch werden abhängig vom Ist-Verbrauch kontinuierlich aktualisiert. Auf diese Weise paßt sich das Kennfeld selbsttätig an alterungsbedingte oder durch Serienstreuung bedingte Unterschiede der Brennkraftmaschine 1 an. Die Anpassung des Kennfelds des spezifischen Kraftstoffverbrauchs erfolgt schrittweise, beispielsweise in der Form, daß die gespeicherte Information über den spezifischen Kraftstoffverbrauch lediglich um einen vergleichsweise kleinen Bruchteil der tatsächlichen Abweichung geändert wird. Auf diese Weise wird der Einfluß von Meßfehlern oder dergleichen bei der Ermittlung des spezifischen Kraftstoffverbrauchs auf das Kennfeld klein gehalten. Es versteht sich, daß die Steuerung 19 beispielsweise nach herkömmlichen iterativen Methoden auch die Betriebspunkte mit minimalem spezifischem Kraftstoffverbrauch nach einer Aktualisierung des Kennfelds korrigiert.

Die Anpassung des Verbrauchskennfelds erfolgt in Abhängigkeit weiterer Betriebsparameter der Brennkraftmaschine 1, insbesondere in Abhängigkeit von der mittels eines Temperatursensors 45 erfaßten Öltemperatur oder Kühlwassertemperatur der Brennkraftmaschine 1.

Neben dem spezifischen Kraftstoffverbrauch können weitere Betriebsparameter bei der Einstellung eines optimalen Betriebspunkts der Brennkraftmaschine 1 mit berücksichtigt werden. Beispielsweise wird die den Betriebspunkt festlegende Leistung auch durch den Zündwinkel oder das Kraftstoff-Luft-Mischungsverhältnis oder die Temperatur der angesaugten Luft beeinflußt. Der Datenspeicher 31 kann zusätzliche Kennfelder für diese Betriebsparameter enthalten. Der Datenspeicher 31 enthält ferner Kombinationsalgorithmen, die es der Steuerung 19 ermöglichen, die Bedeutung der einzelnen Betriebsparameter zu bewerten und abhängig von der Bewertung ein der Betriebssituation angemessenes Optimum mehrerer der Betriebsparameter zu ermitteln.

Basis der Ermittlung des gemeinsamen Optimums mehrerer Betriebsparameter ist, daß die von der Brennkraftmaschine oder die von der Generatoranordnung abgegebene Leistung auf dem vorgegebenen Leistungs-Sollwert konstant gehalten wird. Diese Voraussetzung ermöglicht es, auch nicht kraftstoffverbrauchsorientierte Betriebsparameter in die Optimierung mit einzubeziehen. Die Steuerung 19 variiert die auf die Leistung sich auswirkenden Betriebsgrößen vorzugsweise so, daß sich ein durch die gespeicherten Kombinationsalgorithmen definiertes Optimum aus der Kombination folgender Ziele ergibt:
- Minimaler spezifischer Kraftstoffverbrauch,
- minimale Schadstoffmenge und harmloseste Schadstoffzusammensetzung,
- minimale Geräuschemission,
- möglichst große Schonung der Brennkraftmaschine.

Die Steuerung spricht hierzu auf einen Sensor 47 zur Ermittlung des Schadstoffgehalts, zum Beispiel eine Lambda-Sonde und/oder auf einen Sensor 49 zur Geräuschmessung an. Der Datenspeicher 31 enthält dementsprechend Kennfelder für die Schadstoffemission und -zusammensetzung, ein Geräuschkennfeld sowie Informationen über die Motorschonung. Es versteht sich, daß die Steuerung 19 gegebenenfalls auch nur einen Teil der vorstehenden Kennfelder bei der Bestimmung des optimalen Betriebspunkts berücksichtigt und daß auch diese Kennfelder gegebenenfalls aktualisierbar sind, wie dies anhand des Kennfelds für den spezifischen Kraftstoffverbrauch bereits erläutert wurde.

Beispielsweise variiert die Steuerung 19 den Zündwinkel und die Einstellung des Leistungsstellglieds 29 gemeinsam derart, daß bei konstant gehaltener Leistung der spezifische Kraftstoffverbrauch abnimmt, ohne daß jedoch zulässige Höchstgrenzen der Schadstoffemission überschritten werden. Für die Einstellung des Betriebspunkts mit niedrigstem spezifischem Kraftstoffverbrauch variiert die Steuerung 19 die Drehzahl mittels des Drehzahlreglers 33 und die Einstellung des Leistungsstellglieds 29 derart, daß die ermittelte Ausgangsleistung der Generatoranordnung 3 konstant bleibt. In dem Kennfeld der Fig. 2 bedeutet dies ein Entlangführen des Betriebspunkts entlang einer Kurve konstanter Leistung, wie dies für einen Betriebspunkt 51 durch einen Doppelpfeil 53 angedeutet ist. Der Leistungsregler 37 sorgt nach einer Änderung von Drehzahl und Einstellung des Leistungsstellglieds 29 für das Konstanthalten der Leistung. Entlang der Kurve konstanter Leistung wird der spezifische Kraftstoffverbrauch sowie gegebenenfalls die Werte der darüber hinaus zu berücksichtigenden Betriebsparameter ermittelt und zusammen mit der zugehörigen Drehzahl in dem Datenspeicher 31 gespeichert. Erhöht sich der spezifische Kraftstoffverbrauch bei der Bewegung längs der Kurve konstanter Leistung, so ist dies ein Zeichen, daß sich der aktuelle Betriebspunkt vom optimalen Betriebspunkt entfernt. Durch nachfolgende Variation der Drehzahl sorgt die Steuerung 19 wieder für einen günstigeren spezifischen Kraftstoffverbrauch. Die Einregelung der für minimalen Kraftstoffverbrauch günstigsten Drehzahl kann auch im laufenden Fahrbetrieb erfolgen, so daß das Kennfeld für den exakten spezifischen Kraftstoffverbrauch nicht zwingend bekannt sein muß, um im Betrieb optimale Verhältnisse zu schaffen.

Werden mehrere Betriebsparameter optimiert, so erfolgt dies so, daß bis auf den zu variierenden Parameter die übrigen Parameter konstant gehalten werden.

Fig. 3 zeigt eine Variante einer Antriebsanordnung, die sich von der Antriebsanordnung der Fig. 1 im wesentlichen nur durch die beim Einstellen der Betriebspunkte angewandten Regelungsstrategie unterscheidet. Gleichwirkende Komponenten sind mit den Bezugszahlen der Fig. 1 und zur Unterscheidung mit dem Buchstaben a versehen. Zur Erläuterung des Aufbaus und der Funktionsweise dieser Komponenten wird auf die Beschreibung der Fig. 1 und 2 Bezug genommen.

Im Unterschied zur Antriebsanordnung der Fig. 1 steuert der Drehzahlregler 33a den Stellantrieb 27a des Leistungsstellglieds 29a, während der Leistungsregler 37a über den Spannungsregler 13a die Stromsteuerschaltung 5a den Generatorstrom und damit die von der Generatoranordnung 3a an den Gleichspannungszwischenkreis 7a abgegebene elektrische Leistung beeinflußt. Für die Einstellung eines Betriebspunkts in den Kennfeld der Fig. 4 liest die Steuerung 19a abhängig von dem durch die Stellung des Fahrpedals 23a vorgegebenen Leistungs-Sollwert eine Datenkombination der Daten dieses Leistungs-Sollwerts mit Daten zumindest für einen Drehzahl-Sollwert aus dem Speicher 31a aus. Abhängig von dem Drehzahl-Sollwert regelt der Drehzahlregler 33a die Drehzahl der Brennkraftmaschine auf die Soll-Drehzahl und der Leistungsregler 37a die abgegebene Leistung auf die Soll-Leistung ein. Die Datenkombination kann die Daten weiterer Betriebsparameter umfassen, und im Datenspeicher 31a können Daten für die Optimierung der Betriebsparameter gespeichert sein, wie dies anhand Fig. 1 erläutert wurde.

Bei einer durch Ändern der Fahrpedalstellung gewünschten Leistungsänderung wird im Gegensatz zu der anhand von Fig. 2 erläuterten Einstellstrategie das Leistungsstellglied 29a nicht sofort auf den nach der Leistungsänderung sich ergebenden Einstellwert gestellt, sondern entsprechend der sich ändernden Drehzahl auf der Kurve B des minimalen Kraftstoffverbrauchs nachgeführt. Wie in Fig. 4 dargestellt, ändert sich bei einer Leistungsänderung von P = 20 kW auf P = 60 kW der Drosselklappenwinkel von 35° auf 55° bei einer Drehzahländerung von 1500 auf 3600 Umdrehungen pro Minute. Um ein Beschleunigungsmoment für die Brennkraftmaschine 1a zu erhalten, erhöht die Steuerung 19a den Drehzahl-Sollwert, wodurch die Drehzahl anzusteigen beginnt. Um ein Beschleunigungsmoment für die Brennkraftmaschine 1a zu erhalten, hält der Leistungsregler 37a jedoch die von der Generatoranordnung 3a an den Gleichspannungszwischenkreis 7a abgegebene elektrische Leistung konstant, bis sich ein gewünschtes, die Brennkraftmaschine 1a beschleunigendes Überschußmoment M1 ergibt. Sodann wird die elektrische Leistung entlang einer beliebig wählbaren Kurve A1 in den neuen Betriebspunkt geführt. Sobald die Brennkraftmaschine 1a den Drehzahl-Sollwert erreicht hat, steht die Beschleunigungsleistung für das Kraftfahrzeug voll zur Verfügung. Die Steuerung 19a sorgt auf diese Weise bei minimalem Kraftstoffverbrauch zuerst für die Beschleunigung der Brennkraftmaschine 1a und Generatoranordnung 3a und erst nach Erreichen des neuen Betriebspunkts für die Abgabe der elektrischen Leistung an die Elektromotore 11a.

Für maximale Beschleunigung, zum Beispiel bei "Kick down", wird auch für die Zeit der Leistungsänderung ein Verlassen der Kurve des minimalen Verbrauchs zugelassen, wobei das Leistungsstellglied 29a auf seine durch die Kurve Dₘₐₓ repräsentierte Vollaststellung eingestellt wird. Die Brennkraftmaschine 1 folgt damit im Kennfeld der Fig. 4 der Linie 55, und für die Beschleunigung der Brennkraftmaschine steht das Überschußmoment M2 zur Verfügung, nachdem der Leistungsregler 37a die elektrische Leistung wiederum entsprechend der Kurve A1 nachführt. Sobald die Brennkraftmaschine 1a den Drehzahl-Sollwert erreicht hat, wird das Stellglied auf den Betriebspunkt mit minimalem Kraftstoffverbrauch zurückgestellt (55° im Beispiel der Fig. 4)

Die Möglichkeit, Kennfelddaten des Leistungskennfelds der Einheit aus Brennkraftmaschine und Generatoranordnung zu aktualisieren, erlaubt eine Fehlerdiagnose der Brennkraftmaschine, wie dies nachfolgend anhand der Antriebsanordnung der Fig. 1 erläutert wird. Die Diagnosemöglichkeit besteht selbstverständlich auch bei der Antriebsanordnung der Fig. 3.

Für die Fehlerdiagnose überwacht die Steuerung 19 die in dem Datenspeicher 31 gespeicherten Kennfelddaten für den spezifischen Kraftstoffverbrauch. Aus der Drehzahlabhängigkeit und der Größe aktualisierter Verbrauchsdaten kann durch Vergleich mit früheren Daten, insbesondere mit einem den Neuzustand der Brennkraftmaschine 1 repräsentierenden ursprünglichen Soll-Kennfeld eine Information über den Motorzustand, zum Beispiel dessen Verschleiß, gewonnen werden. Beispielsweise kann bei einem Vierzylindermotor bei plötzlichem Abfall des Kehrwerts des spezifischen Kraftstoffverbrauchs auf 75% des ursprünglichen Werts auf einen Ausfall eines der Zylinder, zum Beispiel durch eine defekte Zündkerze, geschlossen werden.

Bei Feststellen eines Fehlers erzeugt die Steuerung 19 ein den Fahrer zum Beispiel über ein Display 57 warnendes Informationssignal und speichert den diagnostizierten Fehler als Information für eine künftige Reparatur in dem Datenspeicher 31 ab. Gegebenenfalls aktiviert die Steuerung 19 durch Veränderung der Kraftstoffeinspritzmenge ein Notfahrprogramm, wobei sie die Kraftstoffeinspritzmenge gegebenenfalls gezielt für einzelne Zylinder reduziert oder ganz abstellt. Weiterhin oder auch alternativ kann die Steuerung 19 die maximale Leistung der Brennkraftmaschine 1 und/oder die maximale Drehzahl reduzieren bzw. die im Betrieb erreichbare Drehzahl begrenzen.

## Patentansprüche

1. Antriebsanordnung für ein Kraftfahrzeug, umfassend eine Brennkraftmaschine (1) mit wenigstens einem ihre Leistung und/oder ihr Drehmoment und/oder ihre Drehzahl beeinflussenden, von einem Stellantrieb (27) steuerbaren Stellglied (29),
eine mit der Abtriebswelle der Brennkraftmaschine (1) drehfest verbundene elektrische Generatoranordnung (3),
wenigstens einen aus der Generatoranordnung (3) gespeisten, das Kraftfahrzeug antreibenden Elektromotor (11),
eine elektronische Steuerung (19, 33, 37), die einerseits wenigstens den einen Stellantrieb (27) und andererseits die von der Generatoranordnung (3) erzeugte elektrische Leistung und/oder die von dem Elektromotor (11) aufgenommene elektrische Leistung abhängig von der Einstellung eines Fahrpedals (23) steuert,
Mittel zur Erfassung eines Istwerts der Drehzahl der Brennkraftmaschine (1) oder der mit ihr gekuppelten Generatoranordnung (3) sowie
Mittel zur Erfassung eines Istwerts der von der Generatoranordnung (3) erzeugten und/oder der von dem Elektromotor (11) aufgenommenen elektrischen Leistung, wobei die Steuerung (19, 33, 37) Drehzahl-Regelmittel (33) umfaßt, die die Ist-Drehzahl auf einem vorgegebenen Drehzahl-Sollwert halten und Leistungs-Regelmittel (37) umfaßt, die die elektrische Ist-Leistung auf einem vorgegebenen Leistungs-Sollwert halten, und der Steuerung (19, 33, 37) ein Datenspeicher (31) für Kombinationen von Daten für den Leistungs-Sollwert mit Daten für den Drehzahl-Sollwert und/oder Daten für die Einstellung wenigstens des einen Stellantriebs (27) zugeordnet ist und die Steuerung (19, 33, 37) die Datenkombinationen abhängig von der Einstellung des Fahrpedals (23) auswählt,
dadurch gekennzeichnet,
daß die Datenkombinationen Betriebspunkte aus dem Motorkennlinienfeld der Brennkraftmaschine (1) mit Optimumswerten bezüglich wenigstens eines Betriebsparameters, insbesondere Betriebspunkte mit minimalem spezifischem Kraftstoffverbrauch und/oder minimaler Schadstoffemission und/oder minimaler Geräuschentwicklung und/oder maximaler Schonung der Brennkraftmaschine (1), in Abhängigkeit von Leistungs-Sollwerten festlegen, daß der Steuerung (19,33,37) ein Sensor zum Erfassen eines Istwerts des die Datenkombination bestimmenden Betriebsparameters zugeordnet ist, daß die Steuerung (19,33,37) abhängig von dem vorgegebenen Leistungs-Sollwert eine Datenkombination mit Daten für die Einstellung wenigstens des einen Stellglieds (27) der Brennkraftmaschine (1) und/oder Daten für den Drehzahl-Sollwert aus dem Datenspeicher auswählt und daß die Steuerung nach Einstellen des Betriebspunktes an der Brennkraftmaschine (1) eine Abweichung des Istwerts von dem durch die Datenkombination des Betriebspunktes vorgegebenen gespeicherten Wert des Betriebsparameters erfaßt und den gespeicherten Wert abhängig von der Abweichung, insbesondere in Inkrementen, korrigiert.

2. Antriebsanordnung nach Anspruch 1,
dadurch gekennzeichnet,
daß die Drehzahl-Regelmittel (33) die elektrische Leistung der Generatoranordnung (3) und/oder des Elektromotors (11) beeinflussen, daß die Steuerung (19, 33, 37) den Stellantrieb (27) eines Leistungs-Stellglieds (29) der Brennkraftmaschine (1), insbesondere einer Drosselklappen- oder Einspritzpumpenanordnung, zunächst entsprechend den aus dem Datenspeicher (31) ausgewählten Einstelldaten einstellt und nach Einregelung des Drehzahl-Sollwerts die Leistungs-Regelmittel (37) den Stellantrieb (27) des Leistungs-Stellglieds (29) beeinflussen.

3. Antriebsanordnung nach Anspruch 1,
dadurch gekennzeichnet,
daß die Drehzahl-Regelmittel (33a) den Stellantrieb (27a) eines Leistungs-Stellglieds (29a) der Brennkraftmaschine (1a) insbesondere einer Drosselklappen- oder Einspritzpumpenanordnung, beeinflussen und die Leistungs-Regelmittel (37a) die elektrische Leistung der Generatoranordnung (3a) und/oder des Elektromotors (11a) beeinflussen.

4. Antriebsanordnung nach Anspruch 2 oder 3,
dadurch gekennzeichnet,
daß die Steuerung (19, 33, 37) bei einer Änderung des vorgegebenen Leistungs-Sollwerts das Leistungs-Stellglied (27) der Brennkraftmaschine (1) auf die durch die Datenkombination des geänderten Leistungs-Sollwerts bestimmte Einstellung einstellen.

5. Antriebsanordnung nach Anspruch 2 oder 3,
dadurch gekennzeichnet,
daß die Steuerung (19a, 33a, 37a) bei einer Änderung des vorgegebenen Leistungs-Sollwerts die elektrische Leistung anfänglich konstant hält, während die Drehzahl-Regelmittel (27a) die Drehzahl an den durch die Datenkombination des geänderten Leistungs-Sollwerts bestimmten Drehzahl-Sollwert annähern.

6. Antriebsanordnung nach Anspruch 1,
dadurch gekennzeichnet,
daß die Steuerung (19, 33, 37) nach einer Korrektur des gespeicherten Werts des Betriebsparameters den Betriebspunkt, welcher dem Optimum des Betriebsparameters zugeordnet ist,
abhängig von dem korrigierten Wert des Betriebsparameters, neu festlegt.

7. Antriebsanordnung nach Anspruch 1 oder 6,
dadurch gekennzeichnet,
daß der Steuerung (19, 33, 37) ein die Temperatur der Brennkraftmaschine erfassender Sensor (45) zugeordnet ist und daß die Steuerung (19, 33, 37) den gespeicherten Wert des Betriebsparameters abhängig von der erfaßten Temperatur korrigiert.

8. Antriebsanordnung nach einem der Ansprüche 1 bis 7,
dadurch gekennzeichnet,
daß die Steuerung (19, 33, 37) wenigstens einen auf einen Betriebsparameter der Brennkraftmaschine (1) und/oder der Generatoranordnung (3) und/oder des Elektromotors (11) ansprechenden Sensor, insbesondere einen Temperatursensor (45) und/oder einen Abgassensor (47), aufweist, daß die im Datenspeicher gespeicherten Datenkombinationen zusätzlich Daten des Betriebsparameters umfassen und die Steuerung (19, 33, 37) die Datenkombination abhängig von dem erfaßten Wert des Betriebsparameters auswählt.

9. Antriebsanordnung nach einem der Ansprüche 1 bis 8,
dadurch gekennzeichnet,
daß die Steuerung (19, 33, 37) mehrere die Leistung und/oder das Drehmoment und/oder die Drehzahl der Brennkraftmaschine (1) auf der Grundlage unterschiedlicher Betriebsparameter beeinflussende Stellmittel und/oder Stellantriebe (27) von Stellgliedern der Brennkraftmaschine (1) steuert und daß der Datenspeicher (31) Datenkombinationen speichert, die auch Daten für die Einstellungen mehrerer Stellmittel bzw. Stellantriebe umfassen.

10. Antriebsanordnung nach einem der Ansprüche 1 bis 9 ,
dadurch gekennzeichnet,
daß der Steuerung (19, 33, 37) Sensoren (43, 45, 47, 49) zur Erfassung von Istwerten mehrerer Betriebsparameter der Brennkraftmaschine (1), insbesondere zur Erfassung des spezifischen Kraftstoffverbrauchs und/oder der Schadstoffemission und/oder der Schadstoffzusammensetzung und/oder der Geräuschentwicklung zugeordnet sind,
daß der Datenspeicher (31) Kombinationsalgorithmen für vorbestimmte, gleichzeitig zu erreichende Optima mehrerer der Betriebsparameter speichert
und da» die Steuerung (19, 33, 37) bei auf dem vorgegebenen Leistungs-Sollwert gehaltener Leistung der Brennkraftmaschine (1) oder der Generatoranordnung (3) oder des Elektromotors (11) den Drehzahl-Sollwert und/oder die Einstellung wenigstens des einen Stellantriebs (27) abhängig von den erfaßten Istwerten der Betriebsparameter und den im Datenspeicher (31) gespeicherten Kombinationsalgorithmen so variiert, daß die Brennkraftmaschine (1) bei den Optima der Betriebsparameter betrieben wird.

11. Antriebsanordnung nach Anspruch 10,
dadurch gekennzeichnet,
daß die Steuerung (19, 33, 37) den Drehzahl-Sollwert und/oder die Einstellung wenigstens des einen Stellantriebs (27) so variiert,
daß zusätzlich zur Leistung zumindest einer der Betriebsparameter auf einem konstanten Wert gehalten ist, während der Wert eines weiteren Betriebsparameters dem Optimum angenähert wird.

12. Antriebsanordnung nach Anspruch 10 oder 11 ,
dadurch gekennzeichnet,
daß der Datenspeicher (31) ferner Kennfelddaten für Kombinationen von Daten für den Leistungs-Sollwert und/oder Daten für den Drehzahl-Sollwert und/oder Daten für die Einstellung wenigstens des einen Stellantriebs (27) mit Daten für den Wert zumindenst eines der Betriebsparameter speichert und daß die Steuerung (19, 33, 37) Abweichungen des von dem Sensor (43, 45, 47, 49) erfaßten Istwerts des Betriebsparameters von dem gespeicherten Wert erfaßt und den gespeicherten Wert abhängig von der Abweichung insbesondere in Inkrementen korrigiert.

13. Antriebsanordnung nach Anspruch 12,
dadurch gekennzeichnet,
daß die Steuerung (19, 33, 37) den Drehzahl-Sollwert und die Einstellung wenigstens des einen Stellantriebs (27) abhängig von den gespeicherten, entsprechend den erfaßten Istwerten aktualisierten Kennfelddaten variiert.

14. Antriebsanordnung nach Anspruch 12 oder 13,
dadurch gekennzeichnet,
daß der Datenspeicher (31) Kombinationen von Anfangsdaten speichert, die die Kennfelddaten im Neuzustand der Brennkraftmaschine (1) repräsentieren
und daß die Steuerung (19, 33, 37) die korrigierten Daten wenigstens eines Betriebsparameters, insbesondere des spezifischen Kraftstoffverbrauchs mit den Anfangsdaten vergleicht und bei Überschreitung eines vorbestimmten Werts oder eines vorbestimmten Kennfeldverlaufs der Abweichung ein eine Betriebsstörung repräsentierendes Steuersignal erzeugt.

15. Antriebsanordnung nach einem der Ansprüche 1 bis 14,
dadurch gekennzeichnet,
daß die Drehzahl-Regelmittel (33) die Ist-Drehzahl im zeitlichen Mittel auf einem vorgegebenen Drehzahl-Sollwert halten und die Leistungs-Regelmittel (37) die elektrische Ist-Leistung im zeitlichen Mittel auf einem vorgegebenen Leistungs-Sollwert halten, daß die Steuerung (19, 33, 37) den momentanen Verlauf des Stroms der Generatoranordnung (3) in Abhängigkeit von der momentanen Kurbelwellen-Winkelposition der Brennkraftmaschine (1) erfaßt, abhängig von dem Strom den momentanen Verlauf des Drehmoments der Brennkraftmaschine (1) in Abhängigkeit von der Kurbelwellen-Winkelposition ermittelt und mit in einem Datenspeicher (31) gespeicherten Sollwerten für die Größe und/oder den momentanen Verlauf des Drehmoments vergleicht sowie bei Abweichungen mit einer vorbestimmten Größe oder einem vorbestimmten Verlauf ein eine Betriebsstörung repräsentierendes Steuersignal erzeugt.

## Claims

1. Drive arrangement for a motor vehicle comprising an internal combustion engine (1) with at least one actuator (29), which controls its power and/or torque and/or speed and is operated by a pilot motor (27), further comprising an electric generator device (3) non-rotatably connected to the drive shaft of the internal combustion engine (1), at least one electric motor (11) powered by the generator device (3) and driving the motor vehicle, an electronic control (19, 33, 37) controlling on the one hand at least the one pilot motor (27) and on the other hand the electric power generated by the generator device (3) and/or the electric power consumed by the electric motor as a function of the position of an accelerator pedal (23), means for determining an actual value for the speed of the internal combustion engine (1) or of the generator device (3) coupled thereto, and means for determining an actual value for the electric power generated by the generator device (3) and/or consumed by the electric motor (11), wherein the control (19, 33, 37) comprises speed adjustment means (33) which maintain the actual speed at a specified speed reference value and power adjustment means (37) which maintain the actual electric power at a specified power reference value, and a data store (31) for data combinations for the power reference value with data for the speed reference value and/or data for setting at least the one pilot motor (27) is allocated to the control (19, 33, 37), and the control (19, 33, 37) selects the data combinations as a function of the position of the accelerator pedal (23),
characterised in that
the data combinations establish points of operation from the motor characteristic field of the internal combustion engine (1) with optimum values in respect of at least one operating parameter, in particular operating points with minimum specific fuel consumption and/or minimum toxic emission and/or minimum noise production and/or minimum stress on the internal combustion engine (1), as a function of power reference values, in that the control (19, 33, 37) is allocated a sensor for detecting an actual value of the operating parameter determining the data combination, in that the control (19, 33, 37) selects from the data store as a function of the specified power reference value a data combination with data for the setting of at least the one pilot motor (27) of the internal combustion engine (1) and/or data for the speed reference value, and in that the control, after setting the operating point at the internal combustion engine (1), detects a deviation of the actual value from the value of the operating parameter stored and specified by the data combination of the operating point and corrects the value stored as a function of the deviation, in particular in increments.

2. Drive arrangement according to claim 1,
characterised in that
the speed adjustment means (33) control the electric power of the generator device (3) and/or of the electric motor (11), in that the control (19, 33, 37) adjusts the pilot motor (27) of a power actuator (29) of the internal combustion engine (1), in particular a throttle valve or injection pump device, at first according to the setting data selected from the data store (31), and in that after setting of the speed reference value, the power adjustment means (37) control the pilot motor (27) of the power actuator (29).

3. Drive arrangement according to claim 1,
characterised in that
the speed adjustment means (33a) control the pilot motor (27a) of a power actuator (29a) of the internal combustion engine (1a), in particular a throttle valve or injection pump arrangement, and the power adjustment means (37a) control the electric power of the generator device (3a) and/or of the electric motor (11a).

4. Drive arrangement according to claim 2 or 3,
characterised in that
in the case of a change in the specified power reference value, the control (19, 33, 37) sets the power actuator (27) of the internal combustion engine (1) to the setting determined by the data combination of the altered power reference value.

5. Drive arrangement according to claim 2 or 3,
characterised in that
in the case of a change in the specified power reference value, the control (19a, 33a, 37a) keeps the electric power constant initially, whilst the speed adjustment means (27a) approximate the speed to the speed reference value determined by the data combination of the altered power reference value.

6. Drive arrangement according to claim 1,
characterised in that
after a correction of the stored value of the operating parameter, the control (19, 33, 37) re-sets the operating point, which is associated with the optimum value of the operating parameter, as a function of the corrected value.

7. Drive arrangement according to claim 1 or 6,
characterised in that
a sensor (45) for detecting the temperature of the internal combustion engine is allocated to the control (19, 33, 37) and in that the control (19, 33, 37) corrects the stored value of the operating parameter as a function of the temperature detected.

8. Drive arrangement according to one of claims 1 to 7,
characterised in that
the control (19, 33, 37) has at least one sensor, in particular a temperature sensor (45) and/or an exhaust gas sensor (47), responding to an operating parameter of the internal combustion engine (1) and/or to the generator device (3) and/or to the electric motor (11), in that the data combinations stored in the data store additionally comprise data of the operating parameter and in that the control (19, 33, 37) selects the data combination as a function of the value of the operating parameter detected.

9. Drive arrangement according to one of claims 1 to 8,
characterised in that
the control (19, 33, 37) controls a plurality of actuating means and/or pilot motors (27) of actuators of the internal combustion engine (1) which control the power and/or the torque and/or the speed of the internal combustion engine (1) on the basis of various operating parameters, and in that the data store (31) stores data combinations which also comprise data for the settings of a plurality of actuating means or pilot motors.

10. Drive arrangement according to one of claims 1 to 9,
characterised in that
sensors (43, 45, 47, 49) for detecting actual values of a plurality of operating parameters of the internal combustion engine (1), in particular for detecting the specific fuel consumption and/or toxic emissions and/or the composition of toxins and/or noise production are allocated to the control (19, 33, 37),
in that the data store (31) stores combination algorithms for specified optimum values of a plurality of operating parameters to be achieved simultaneously,
and in that if the power of the internal combustion engine (1) or of the generator device (3) and or of the electric motor (11) is maintained at the specified power reference value, the control (19, 33, 37) so varies the speed reference value and/or the setting of at least the one pilot motor (27) as a function of the actual valued detected of the operating parameters and the combination algorithms stored in the data store (31) that the internal combustion engine (1) is operated at the optimum values of the operating parameters.

11. Drive arrangement according to claim 10,
characterised in that
the control (19, 33, 37) so varies the speed reference value and/or the setting of at least the one pilot motor (27) that, in addition to the power, at least one of the operating parameters is maintained at a constant value, whilst the value of a further operating parameter is approximated to the optimum.

12. Drive arrangement according to claim 10 or 11,
characterised in that
the data store (31) further stores characteristic field data for combinations of data for the power reference value and/or data for the speed reference value and/or data for the setting of at least the one pilot motor (27) with data for the value of at least one of the operating parameters, and in that the control (19, 33, 37) detects deviations of the actual value of the operating parameter detected by the sensor (43, 45, 47, 49) from the value stored and corrects the value stored as a function of the deviation, in particular in increments.

13. Drive arrangement according to claim 12,
characterised in that
the control (19, 33, 37) varies the speed reference value and the setting of at least the one pilot motor (27) as a function of the characteristic field data stored and actualised according to the actual values detected.

14. Drive arrangement according to claim 12 or 13,
characterised in that
the data store (31) stores combinations of starting data representing the characteristic field data in the new state of the internal combustion engine (1)
and in that the control (19, 33, 37) compares the corrected data of at least one operating parameter in particular the specific fuel consumption, with the starting data and, if a specified value or specified characteristic field curve of the deviation is exceeded, generates a control signal representing an operating fault.

15. Drive arrangement according to one of claims 1 to 14,
characterised in that
the speed adjustment means (33) maintains the actual speed in the temporal mean at a specified speed reference value, and the power adjustment means (37) maintains the electric actual power in the temporal mean at a specified power reference value, in that the control (19, 33, 37) detects the instantaneous curve of the current of the generator device (3) as a function of the instantaneous angular position of the crankshaft of the internal combustion engine (1), as a function of the current determines the instantaneous curve of the torque of the internal combustion engine (1) as a function of the angular position of the crankshaft and compares it with reference values for the size and/or instantaneous curve of the torque stored in a data store (31), and in the case of deviations of a specified size or specified curve generates a control signal representing an operating fault.

## Revendications

1. Dispositif d'entraînement pour un véhicule à moteur, comprenant un moteur à combustion interne (1) comportant au moins un élément de réglage (29) influençant sa puissance et/ou son couple de rotation et/ou sa vitesse de rotation et pouvant être commandé par un entraînement de réglage (27), un dispositif générateur (3) électrique solidaire en rotation avec l'arbre d'entraînement du moteur à combustion interne (1), au moins un moteur électrique (11) alimenté par le dispositif générateur (3) et entraînant le véhicule, une commande électronique (19,33,37) qui commande d'une part au moins ledit entraînement de réglage (27) et d'autre part la puissance électrique engendrée par le dispositif générateur (3) et/ou la puissance électrique reçue par le moteur électrique (11) en dépendance du réglage d'une pédale (23), des moyens pour détecter une valeur effective de la vitesse de rotation du moteur à combustion interne (1) ou du dispositif générateur (3) couplé à celui-ci, ainsi que des moyens pour détecter une valeur effective de la puissance électrique engendrée par le dispositif générateur (3) et/ou reçue par le moteur électrique (11), la commande (19,33,37) comprenant des moyens de réglage de la vitesse de rotation (33) qui maintiennent la vitesse de rotation effective à une valeur prescrite prédéfinie de la vitesse de rotation et comprenant des moyens de réglage de la puissance (37) qui maintiennent la puissance électrique effective à une valeur prescrite prédéfinie de la puissance, et une mémoire de données, (31) pour des combinaisons de données pour la valeur prescrite de la puissance avec des données pour la valeur prescrite de la vitesse de rotation et/ou des données pour le réglage au moins dudit entraînement de réglage (27), étant associée à la commande (19,33,37), et la commande (19,33,37) sélectionnant les combinaisons de données en dépendance du réglage de la pédale (23),
caractérisé en ce que les combinaisons de données fixent des points de fonctionnement du champ des caractéristiques du moteur à combustion interne (1) avec des valeurs optimales relativement à au moins un paramètre de fonctionnement, en particulier des points de fonctionnement présentant une consommation de combustible spécifique minimale et/ou une émission minimale de substances nocives et/ou une génération de bruit minimale et/ou un soin maximal du moteur à combustion interne (1) en dépendance de valeurs prescrites de la puissance, en ce qu'à la commande (19,33,37) est associé un capteur pour détecter une valeur effective du paramètre de fonctionnement déterminant la combinaison de données, en ce que la commande (19,33,37) sélectionne, à partir de la mémoire de données, en dépendance de la valeur prescrite prédéfinie de la puissance, une combinaison de données avec des données pour le réglage au moins dudit élément de réglage (27) du moteur à combustion interne (1) et/ou des données pour la valeur prescrite de la vitesse de rotation, et en ce que la commande détecte, après le réglage du point de fonctionnement sur le moteur à combustion interne (1), une divergence de la valeur effective par rapport à la valeur du paramètre de fonctionnement, stockée et prédéfinie par la combinaison de données du point de fonctionnement, et corrige la valeur stockée en dépendance de la divergence, en particulier par incréments.

2. Dispositif d'entraînement selon la revendication 1,
caractérisé en ce que les moyens de réglage de la vitesse de rotation (33) influencent la puissance électrique du dispositif générateur (3) et/ou du moteur électrique (11), en ce que la commande (19,33,37) règle l'entraînement de réglage (27) d'un élément de réglage de la puissance (29) du moteur à combustion interne (1), en particulier un dispositif à clapet d'étranglement ou à pompe d'injection, tout d'abord en correspondance des données de réglage choisies à partir de la mémoire de données (31), et en ce que, après le réglage de la valeur prescrite de la vitesse de rotation, les moyens de réglage de la puissance (37) influencent l'entraînement de réglage (27) de l'élément de réglage de la puissance (29).

3. Dispositif d'entraînement selon la revendication 1,
caractérisé en ce que les moyens de réglage de la vitesse de rotation (33a) influencent l'entraînement de réglage (27a) d'un élément de réglage de la puissance (29a) du moteur à combustion interne (1a), en particulier un dispositif à clapet d'étranglement ou à pompe d'injection, et les moyens de réglage de la puissance (37a) influencent la puissance électrique du dispositif générateur (3a) et/ou du moteur électrique (11a).

4. Dispositif d'entraînement selon l'une des revendications 2 ou 3,
caractérisé en ce que la commande (19,33,37), lors d'une modification de la valeur prescrite prédéfinie de la puissance, règle l'élément de réglage de la puissance (27) du moteur à combustion interne (1) sur le réglage déterminé par la combinaison de données de la valeur de puissance prescrite modifiée.

5. Dispositif d'entraînement selon l'une des revendications 2 ou 3,
caractérisé en ce que la commande (19a,33a,37a), lors d'une modification de la valeur prescrite prédéfinie de la puissance, maintient constante au début la puissance électrique, tandis que les moyens de réglage de la vitesse de rotation (27a) adaptent approximativement la vitesse de rotation à la valeur de la vitesse de rotation prescrite et déterminée par la combinaison de données de la valeur prescrite modifiée de la puissance.

6. Dispositif d'entraînement selon la revendication 1,
caractérisé en ce que la commande (19,33,37) fixe de nouveau, après une correction de la valeur stockée du paramètre de fonctionnement, le point de fonctionnement qui est associé à l'optimum du paramètre de fonctionnement, en dépendance de la valeur corrigée du paramètre de fonctionnement.

7. Dispositif d'entraînement selon l'une des revendications 1 ou 6,
caractérisé en ce qu'à la commande (19,33,37) est associé un capteur (45) détectant la température du moteur à combustion interne, et en ce que la commande (19,33,37) corrige la valeur stockée du paramètre de fonctionnement en dépendance de la température détectée.

8. Dispositif d'entraînement selon l'une des revendications 1 à 7,
caractérisé en ce que la commande (19,33,37) comporte au moins un capteur, en particulier un capteur de température (45) et/ou un capteur de gaz d'échappement (47), réagissant à un paramètre de fonctionnement du moteur à combustion interne (1) et/ou du dispositif générateur (3) et/ou du moteur électrique (11), en ce que les combinaisons de données stockées dans la mémoire de données comportent de plus des données du paramètre de fonctionnement, et en ce que la commande (19,33,37) sélectionne la combinaison de données en dépendance de la valeur détectée du paramètre de fonctionnement.

9. Dispositif d'entraînement selon l'une des revendications 1 à 8,
caractérisé en ce que la commande (19,33,37) commande plusieurs moyens de réglage influençant, sur la base de paramètres de fonctionnement différents, la puissance et/ou le couple de rotation et/ou la vitesse de rotation du moteur à combustion interne (1) et/ou des entraînements de réglage (27) d'éléments de réglage du moteur à combustion interne (1), et en ce que la mémoire de données (31) stocke des combinaisons de données qui comportent également des données pour les réglages de plusieurs moyens de réglage ou d'entraînements de réglage.

10. Dispositif d'entraînement selon l'une des revendications 1 à 9,
caractérisé en ce qu'à la commande (19,33,37) sont associés des capteurs (43,45,47,49) pour détecter des valeurs effectives de plusieurs paramètres de fonctionnement du moteur à combustion interne (1), en particulier pour détecter la consommation de carburant spécifique et/ou l'émission de substances nocives et/ou la composition de substances nocives et/ou la génération de bruit, en ce que la mémoire de données (31) stocke des algorithmes de combinaison pour des optima prédéfinis et devant être obtenus simultanément de plusieurs des paramètres de fonctionnement, et en ce que, pour une puissance maintenue à la valeur prescrite et prédéfinie de puissance du moteur à combustion interne (1) ou du dispositif générateur (3) ou du moteur électrique (11), la commande (19,33,37) fait varier la valeur prescrite de la vitesse de rotation et/ou le réglage au moins dudit entraînement de réglage (27), en dépendance des valeurs effectives détectées des paramètres de fonctionnement et des algorithmes de combinaison stockés dans la mémoire de données (31), de sorte que le moteur à combustion interne (1) est entraîné pour les optima des paramètres de fonctionnement.

11. Dispositif d'entraînement selon la revendication 10,
caractérisé en ce que la commande (19,33,37) fait varier la valeur prescrite de la vitesse de rotation et/ou le réglage au moins dudit entraînement de réglage (27) de sorte que, en plus de la puissance, au moins l'un des paramètres de fonctionnement est maintenu à une valeur constante, tandis que la valeur d'un autre paramètre de fonctionnement est adaptée approximativement à l'optimum.

12. Dispositif d'entraînement selon l'une des revendications 10 ou 11,
caractérisé en ce que la mémoire de données (31) stocke de plus des données de champ caractéristique pour des combinaisons de données pour la valeur prescrite de la puissance et/ou des données pour la valeur prescrite de la vitesse de rotation et/ou des données pour le réglage au moins dudit entraînement de réglage (27) avec des données pour la valeur d'au moins l'un des paramètres de fonctionnement, et en ce que la commande (19,33,37) détecte des divergences de la valeur effective détectée par le capteur (43,45,47,49) du paramètre de fonctionnement par rapport à la valeur stockée et corrige la valeur stockée en dépendance de la divergence, en particulier par incréments.

13. Dispositif d'entraînement selon la revendication 12,
caractérisé en ce que la commande (19,33,37) fait varier la valeur prescrite de la vitesse de rotation et le réglage au moins dudit entraînement de réglage (27) en dépendance des données de champ caractéristique stockées et actualisées en correspondance des valeurs effectives détectées.

14. Dispositif d'entraînement selon l'une des revendications 12 ou 13,
caractérisé en ce que la mémoire de données (31) stocke des combinaisons de données de commencement qui représentent les données de champ caractéristique dans le nouvel état du moteur à combustion interne (1), et en ce que la commande (19,33,37) compare les données corrigées d'au moins un paramètre de fonctionnement, en particulier la consommation spécifique de carburant, aux données de commencement, et engendre, lors du dépassement d'une valeur prédéterminée ou d'un comportement de champ caractéristique prédéterminé de la divergence, un signal de commande représentant une perturbation du fonctionnement.

15. Dispositif d'entraînement selon l'une des revendications 1 à 14,
caractérisé en ce que les moyens de réglage de la vitesse de rotation (33) maintiennent la vitesse de rotation effective, en moyenne temporelle, à une valeur de vitesse de rotation prescrite prédéfinie et les moyens de réglage de la puissance (37) maintiennent la puissance électrique effective, en moyenne temporelle, à une valeur de puissance prescrite prédéfinie, en ce que la commande (19,33,37) détecte le comportement momentané du courant du dispositif générateur (3) en dépendance de la position angulaire momentanée de l'arbre à manivelle du moteur à combustion interne (1), détermine en dépendance du courant le comportement momentané du couple de rotation du moteur à combustion interne (1) en dependance de la position angulaire de l'arbre à manivelle et le compare à des valeurs prescrites stockées dans une mémoire de données (31) pour l'importance et/ou le comportement momentané du couple de rotation, et engendre, lors de divergences d'une importance prédéterminée ou d'un comportement prédéterminé, un signal de commande représentant une perturbation du fonctionnement.
